# EUROPÄISCHE PATENTSCHRIFT

(11) **EP 1 971 757 B1**
(45) Veröffentlichungstag und Bekanntmachung des Hinweises auf die Patenterteilung: **01.12.2010**
(21) Anmeldenummer: 07702706.8
(22) Anmeldetag: 12.01.2007
(51) Int. Cl.: F01N 3/01, F01N 3/08, F01N 3/021, F01N 3/02

(54) **VERFAHREN UND VORRICHTUNG ZUR VERRINGERUNG DER PARTIKELANZAHL IM ABGAS EINER VERBRENNUNGSKRAFTMASCHINE**
METHOD AND DEVICE FOR REDUCING THE NUMBER OF PARTICLES IN THE EXHAUST GAS OF AN INTERNAL COMBUSTION ENGINE
PROCEDE ET DISPOSITIF DE DIMINUTION DU NOMBRE DES PARTICULES DANS LES GAZ D'ECHAPPEMENT D'UN MOTEUR A COMBUSTION INTERNE

(30) Priorität: 13.01.2006 DE 102006001831
(43) Veröffentlichungstag der Anmeldung: 24.09.2008
(73) Patentinhaber: Emitec Gesellschaft für Emissionstechnologie mbH, 53797 Lohmar (DE)
(72) Erfinder: BRÜCK, Rolf, 51429 Bergisch Gladbach (DE)
(74) Vertreter: Rössler, Matthias
(86) Internationale Anmeldenummer: PCT/EP2007/000232
(87) Internationale Veröffentlichungsnummer: WO 2007/082683

(56) Entgegenhaltungen:
- EP-A1- 0 627 263
- WO-A-01/92692
- DE-A1- 4 223 277
- US-A- 4 205 969
- US-A- 5 695 549
- US-A- 6 036 840
- US-A1- 2005 217 258

## Beschreibung

Gegenstand der vorliegenden Erfindung ist ein Verfahren und eine Vorrichtung zur Verringerung der Partikelanzahl im Abgas einer Verbrennungskraftmaschine.

Verbrennungskraftmaschinen, die mit Kohlenwasserstoffen als Kraftstoff betrieben werden, emittieren ein Abgas, das unter anderem auch kohlenstoffhaltige Partikel enthält. Diese kohlenstoffhaltigen Partikel weisen verschiedene Größen auf, deren Verteilung variabel ist. Insbesondere kohlenstoffhaltige Partikel mit kleinen Durchmessern, die auch als Feinstaub bezeichnet werden, sollen für Erkrankungen von Mensch und Tier verantwortlich sein. Unter Feinstaub werden hier insbesondere Partikel verstanden, deren mittlerer Durchmesser 100 Nanometer oder weniger beträgt. Kohlenstoffhaltige Partikel umfassen insbesondere auch Kohlenstoffpartikel gegebenenfalls mit angelagerten Kohlenwasserstoffen.

Zur Reduktion der Partikelemissionen insbesondere in Kraftfahrzeugen werden oftmals so genannte geschlossene Partikelfilter eingesetzt, bei denen eine Struktur von Abgas durchströmt wird, die wechselweise verschlossene Kanäle und zwischen den Kanälen poröse Wände aufweist. Um einen möglichst geringen Gegendruck des Partikelfilters auch im bereits beladenen Zustand zu gewährleisten, müssen Porositäten eingesetzt werden, die gerade den Feinstaub im wesentlichen ungefiltert passieren lassen, so dass solche geschlossenen Partikelfilter gerade die Partikel passieren lassen, die nach heute vertretener Auffassung eine besonders große Gefährdung der menschlichen Gesundheit verursachen sollen.

Die US-A1-6,036,840 zeigt einen Reaktor und ein Verfahren zur elektrochemischen Konvertierung von in einem Fluid nicht löslichen zu löslichen Partikeln, wobei eine Filterung der Partikel aus dem Abgasstrom und eine nachfolgende katalytische Konvertierung vorgesehen sind.

Die EP-A1-0 627 263 beschreibt eine Filtereinrichtung zur Reduzierung der Partikelanzahl eines Abgases. Die Partikel werden durch elektrische Filter aus dem Abgasstrom entfernt.

Die US 5,695,549 zeigt eine System zur Beseitigung von Partikeln mit kleinen Durchmessern aus einem Abgasstrom. Das Abgas durchströmt eine Vielzahl von siebähnlichen Elektroden, die mit unterschiedlichen Spannungen beaufschlagt sind.

Die WO-A1-01/92692 offenbart eine offene Partikelfalle, bei der in einem Abgasstrang vor einem Wabenkörper ein Plasmareaktor angeordnet ist.

Von daher liegt der vorliegenden Erfindung die Aufgabe zugrunde, ein Verfahren und eine Vorrichtung zur Aufbereitung der Abgase von Verbrennungskraftmaschinen vorzuschlagen, bei denen die aus dem Stand der Technik bekannten Nachteile zumindest gelindert werden.

Die Aufgabe wird gelöst durch eine Vorrichtung und ein Verfahren mit den Merkmalen der unabhängigen Ansprüche. Die jeweiligen abhängigen Ansprüche sind auf vorteilhafte Weiterbildungen gerichtet.

Die erfindungsgemäße Vorrichtung dient der Verringerung der Partikelanzahl im Abgas einer Verbrennungskraftmaschine und umfasst mindestens zwei vom Abgas durchströmbare Strukturen, wobei im Betrieb zunächst eine erste Struktur und dann eine zweite Struktur vom Abgas durchströmt wird. Erfindungsgemäß ist zwischen diesen Strukturen eine elektrische Potentialdifferenz erzeugbar.

Unter einer Struktur wird hier eine Komponente verstanden, die mehrere für ein Fluid durchströmbare Hohlräume umfasst. Beispiele solcher Strukturen sind Wabenkörper, Wire Mesh Strukturen, Metallschaumstrukturen und ähnliches. Die elektrische Potentialdifferenz kann insbesondere dadurch erzeugt werden, dass eine der Strukturen, bevorzugt die zweite Struktur, elektrisch leitend mit einer Masse verbunden wird, während an die erste Struktur eine Spannung, bevorzugt eine im Vergleich zur Masse negative Spannung angelegt wird. Besonders bevorzugt ist eine elektrische Isolierung zwischen mindestens einer der Strukturen und anderen Komponenten des Abgassystems, insbesondere zwischen einer der Strukturen und mindestens einer anderen Struktur, ausgebildet. Bevorzugt ist hierbei eine solche Potentialdifferenz erzeugbar, die nicht zur Bildung eines Plasmas führt.

Die erfindungsgemäße Vorrichtung erlaubt im Betrieb die Agglomeration von Partikeln, so dass sich der mittlere Durchmesser der Partikel erhöht und gleichzeitig die Partikelanzahl im Abgas reduziert. Dies beruht auf einer elektrostatischen Agglomeration, bei der elektrische Ladung auf die Partikel übertragen wird. Dieser Ladungsübertrag kann beispielsweise über Stickstoffionen erfolgen, worauf die Partikel eine negative Ladung tragen. Dies befördert gleichzeitig eine Abscheidung der Partikel auf der als positiv geladenen Elektrode wirkenden entsprechend geladenen Struktur und dort die Agglomeration mehrerer Partikel. Hierdurch erhöht sich der mittlere Partikeldurchmesser. Selbst wenn es nach Abscheidung der Partikel auf der zweiten Struktur zu einem Lösen des dann vergrößerten Partikels von der Struktur kommt, kommt es regelmäßig nicht zu einer Aufsplitterung des vergrößerten Partikels. Dies führt dazu, dass sich im Betrieb einerseits durch die erfindungsgemäße Vorrichtung die Partikelanzahl im Abgas verringert und sich andererseits die Verteilungsfunktion der Partikelgröße hin zu größeren Partikeln verschiebt, so dass insbesondere die Emission von Feinstaub durch die erfindungsgemäße Vorrichtung wesentlich verringert werden kann.

Die mindestens eine Struktur umfasst dabei eine Wabenstruktur und mehrere für ein Fluid durchströmbare Hohlräume.

Hierbei kann es sich um regelmäßige Hohlräume wie beispielsweise Kanäle und/oder um unregelmäßige Hohlräume, die beispielsweise durch Metallschaum oder Wire Mesh Strukturen gebildet werden, handeln.

Hierbei kann es sich bevorzugt um zumindest teilweise metallische Wabenstrukturen handeln. Insbesondere kann in vorteilhafter Weise mindestens eine Struktur durch Aufwickeln oder Verwinden mindestens einer metallischen Lage gebildet sein. In vorteilhafter Weise kann mindestens ein Teilbereich mindestens einer Lage für ein Fluid zumindest teilweise durchströmbar sein. Weiterhin ist auch die Ausbildung einer keramischen Wabenstruktur mit eingelagerten Elektroden möglich und erfindungsgemäß.

Gemäß einer weiteren vorteilhaften Ausgestaltung der erfindungsgemäßen Vorrichtung weist mindestens eine der Strukturen zumindest teilweise eine katalytisch aktive Beschichtung auf.

Hier kann eine übliche Beschichtung eines Drei-Wege Katalysators ausgebildet sein. Grundsätzlich ist eine Beschichtung bevorzugt, die die Umsetzung der Partikel, d. h. insbesondere die zumindest teilweise Oxidation der Partikel, katalysiert, so dass die Regenerationstemperatur insbesondere der zweiten Struktur so in vorteilhafter Weise gesenkt werden kann.

Gemäß einer weiteren vorteilhaften Ausgestaltung der erfindungsgemäßen Vorrichtung weist die Vorrichtung eine Durchströmungsrichtung und die erste Struktur eine erste Länge und die zweite Struktur eine zweite Länge in Durchströmungsrichtung auf, wobei das Verhältnis der ersten Länge zur zweiten Länge kleiner als eins ist.

Um eine möglichst gute Abscheidungsrate zu erreichen, hat es sich als vorteilhaft erwiesen, wenn die zweite Struktur länger ist als die erste Struktur. Insbesondere wird die Länge der zweiten Struktur so gewählt, dass ein vorgebbarer Anteil der Partikel durch die elektrostatischen Kräfte, die die zweite Struktur im Betrieb erzeugt, bis zu den Wänden der Struktur abgelenkt wird. Alternativ zu einem Verhältnis der ersten Länge zur zweiten Länge kleiner als eins kann das Verhältnis auch größer als eins gewählt werden, wobei dann vorteilhafter Weise ein sich an die zweite Struktur anschließendes Stück der Abgasleitung auch auf das gleiche elektrische Potential wie die zweite Struktur gebracht wird, so dass dieses Stück Abgasleitung ebenfalls zur Abscheidung von Partikeln, insbesondere bei großen Abgasströmungen, dienen kann.

Gemäß einer weiteren vorteilhaften Ausgestaltung der erfindungsgemäßen Vorrichtung weist die erste Struktur eine erste Länge in Durchströmungsrichtung auf, wobei zwischen der ersten Struktur und der zweiten Struktur ein Abstand in Durchströmungsrichtung ausgebildet ist, wobei das Verhältnis zwischen erster Länge und Abstand größer als im wesentlichen zwei, bevorzugt größer als im wesentlichen vier und besonders bevorzugt im wesentlichen sieben oder mehr beträgt.

Grundsätzlich kann bei der erfindungsgemäßen Vorrichtung der Abstand so klein gewählt werden, dass gerade kein Kurzschluss zwischen der ersten und der zweiten Struktur erfolgt.

Gemäß einem weiteren Aspekt der vorliegenden Erfindung wird ein Verfahren zum Verringern der Partikelanzahl im Abgas einer Verbrennungskraftmaschine vorgeschlagen, bei dem zunächst eine erste Struktur und dann eine zweite Struktur vom Abgas durchströmt wird, wobei zwischen der ersten und der zweiten Struktur eine elektrische Potentialdifferenz aufgebaut wird. Die Partikel weisen hinter einer zweiten Struktur einen größeren mittleren Durchmesser auf als vor einer ersten Struktur.

Insbesondere kann das erfindungsgemäße Verfahren in einer erfindungsgemäßen Vorrichtung durchgeführt werden.

Gemäß des erfindungsgemäßen Verfahrens variiert die Potentialdifferenz zeitlich.

Insbesondere ist hier eine zeitliche Variation der Potentialdifferenz, bei der die Potentialdifferenz keinen Vorzeichenwechsel aufweist, bei der also das Potential der zweiten Struktur stets höher als das der ersten Struktur liegt. Die Potentialdifferenz variiert hier periodische mit Frequenzen von 10 Hz und weniger, vorzugsweise sogar mit 5 Hz und weniger. Durch eine zeitliche Variation der Potentialdifferenz kann in besonders vorteilhafter Weise die zweite Struktur gleichmäßig und regelbar mit Partikeln beaufschlagt werden.

Gemäß einer weiteren vorteilhaften Ausgestaltung des erfindungsgemäßen Verfahrens ist die Potentialdifferenz größer als 5 Kilovolt (kV).

Insbesondere kann die Potentialdifferenz auch mehr als 10 kV oder sogar 30 kV und mehr betragen. Dies ermöglicht einen effizienten Ladungstransfer auf die Partikel.

Gemäß einer weiteren vorteilhaften Ausgestaltung des erfindungsgemäßen Verfahrens ist die Potentialdifferenz zwischen der ersten Struktur und der zweiten Struktur positiv.

Das heißt, dass bevorzugt die zweite Struktur ein höheres elektrisches Potential aufweist als die erste Struktur, so dass die Partikel beim Durchströmen der ersten Struktur negativ ionisiert und dann auf der zweiten Struktur abgeschieden und agglomeriert werden.

Die für das erfindungsgemäße Verfahren offenbarten Vorteile und Details lassen sich in gleicher Weise auf die erfindungsgemäße Vorrichtung anwenden und übertragen. Die für die erfindungsgemäße Vorrichtung offenbarten Vorteile und Details lassen sich in gleicher Weise auf das erfindungsgemäße Verfahren anwenden und übertragen.

Im folgenden wird die Erfindung anhand der beigefügten Figuren näher erläutert, ohne dass die Erfindung auf die dort gezeigte Ausführung beschränkt wäre. Es zeigen:
- Fig. 1: schematisch ein Ausführungsbeispiel der vorliegenden Erfindung im Längsschnitt und
- Fig. 2: schematisch einen Querschnitt einer möglichen Struktur.

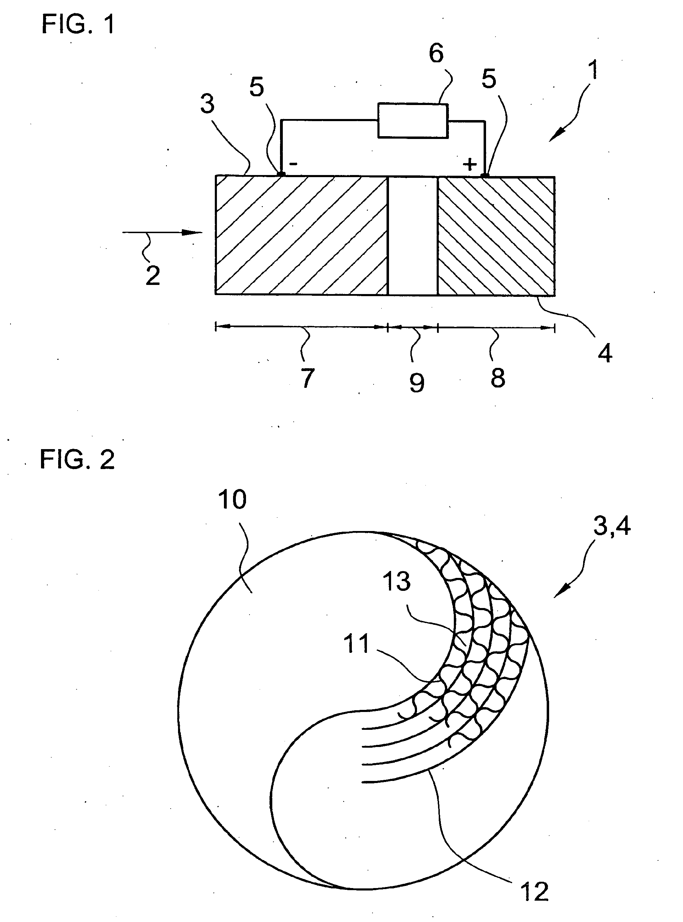

Fig. 1 zeigt schematisch eine erfindungsgemäße Vorrichtung 1 zur Verringerung der Partikelanzahl im Abgas einer nicht gezeigten Verbrennungskraftmaschine. Diese wird im Betrieb in einer Durchströmungsrichtung 2 vom Abgas durchströmt. Im Betrieb der Vorrichtung 1 wird zunächst eine erste Struktur 3 und dann eine zweite Struktur 4 vom Abgas durchströmt. Zwischen diesen Strukturen 3, 4 ist eine elektrische Potentialdifferenz erzeugbar. Die Strukturen 3, 4 weisen jeweils elektrische Anschlüsse 5 auf, über die die Strukturen 3, 4 auf definierte elektrische Potentiale gebracht werden können. Im vorliegenden Ausführungsbeispiel ist die erste Struktur 3 auf einem negativen Potential und die zweite Struktur 4 auf einem positiven elektrischen Potential. Dies wird durch Verbinden der Anschlüsse 5 mit einer entsprechenden Gleichspannungsquelle 6 erreicht.

Durchströmt das mit Partikeln beladene Abgas nun die erste Struktur 3, so wird Ladung auf die kohlenstoffhaltigen Partikel übertragen, so dass diese negative Ladungen tragen. Beim Durchströmen der zweiten Struktur 4 erfolgt dann eine Abscheidung der Partikel auf der zweiten Struktur 4, wobei Partikel aneinander anhaften und miteinander verbunden werden und somit agglomerieren. Die agglomerierten Partikel können später auf der zweiten Struktur 4 umgesetzt oder durch Gaspulse von der zweiten Struktur 4 gelöst werden. Hierdurch weist das Abgas hinter der zweiten Struktur 4 im zeitlichen Mittel weniger Partikel auf als das Abgas vor der ersten Struktur 3. Zudem weisen die Partikel hinter der zweiten Struktur 4 einen größeren mittleren Durchmesser auf als vor der ersten Struktur 3, so dass die Emission insbesondere von Feinstaub im Abgas von Verbrennungskraftmaschinen verringert werden können.

Die erste Struktur 3 weist in Durchströmungsrichtung 2 eine erste Länge 7 und die zweite Struktur 4 eine zweite Länge 8 auf. Die Strukturen 3, 4 weisen einen Abstand 9 voneinander auf. Die zweite Länge 8 ist kleiner als die erste Länge 7. Alternativ oder zusätzlich ist bevorzugt der Abstand 9 kleiner als die erste Länge 7, bevorzugt wesentlich kleiner. Die Strukturen 3, 4 umfassen übliche Wabenstrukturen bzw. Wabenkörper. Zusätzlich können die Strukturen 3, 4 zumindest teilweise beispielsweise als Wire-Mesh Strukturen, Filterkerzen, Metall- oder Keramikschäume ausgebildet sein.

Fig. 2 zeigt schematisch ein Beispiel einer Struktur 3, 4 im Querschnitt. Die Struktur 3, 4 ist als Wabenstruktur 10 ausgebildet. Die Wabenstruktur 10 ist im vorliegenden Ausführungsbeispiel aus miteinander verwundenen Stapeln von strukturierten 11 und im wesentlichen glatten metallischen Lagen 12 geformt, die Kanäle 13 bilden. Durch diese Kanäle 13 kann das Abgas strömen. Erste 3 und zweite Struktur 4 können bevorzugt mit unterschiedlichen Anzahlen von Kanälen pro Querschnittsfläche aus unterschiedlich dicken metallischen Lagen 11, 12 gebildet werden. Bevorzugt kann zumindest ein Teil der Lagen 11, 12 zumindest in Teilbereichen porös sein.

Durch Transfer einer Ladung auf im Abgas enthaltene kohlenstoffhaltige Partikel in der ersten Struktur 3 erfolgt eine Abscheidung und Agglomeration der Kohlenstoffhaltigen Partikel auf der zweiten Struktur 4.

### Bezugszeichenliste

- 1: Vorrichtung zur Verringerung der Partikelanzahl im Abgas einer Verbren- nungskraftmaschine
- 2: Durchströmungsrichtung
- 3: erste Struktur
- 4: zweite Struktur
- 5: elektrischer Anschluss
- 6: Gleichspannungsquelle
- 7: erste Länge
- 8: zweite Länge
- 9: Abstand
- 10: Wabenstruktur
- 11: Strukturierte metallische Lage
- 12: im wesentlichen glatte metallische Lage
- 13: Kanal

## Patentansprüche

1. Vorrichtung (1) zur Verringerung der Partikelanzahl im Abgas einer Verbrennungskraftmaschine umfassend mindestens zwei vom Abgas durchströmbare Strukturen (3, 4), **dadurch gekennzeichnet, dass** im Betrieb zunächst eine erste Struktur (3) und dann eine zweite Struktur (4) vom Abgas durchströmt wird, wobei zwischen diesen Strukturen (3, 4) eine elektrische Potentialdifferenz erzeugbar ist und weiter diese Strukturen (3, 4) jeweils eine Wabenstruktur (10) umfassen mit mehreren für ein Fluid durchströmbaren Hohlräumen.

2. Vorrichtung (1) nach Anspruch 1, bei der mindestens eine der Strukturen (3, 4) zumindest teilweise eine katalytisch aktive Beschichtung aufweist.

3. Vorrichtung (1) nach einem der vorhergehenden Ansprüche, bei der die Vorrichtung (1) eine Durchströmungsrichtung (2) und die erste Struktur (3) eine erste Länge (7) und die zweite Struktur (4) eine zweite Länge (8) in Durchströmungsrichtung (2) aufweist, wobei das Verhältnis der ersten Länge (7) zur zweiten Länge (8) kleiner als eins ist.

4. Vorrichtung (1) nach einem der vorhergehenden Ansprüche, bei der die erste Struktur (3) eine erste Länge (7) in Durchströmungsrichtung (2) aufweist, wobei zwischen der ersten Struktur (3) und der zweiten Struktur (4) ein Abstand (9) in Durchströmungsrichtung (2) ausgebildet ist, wobei das Verhältnis zwischen erster Länge (7) und Abstand (9) größer als im wesentlichen zwei, bevorzugt größer als im wesentlichen vier und besonders bevorzugt im wesentlichen sieben oder mehr beträgt.

5. Verfahren zum Verringern der Partikelanzahl im Abgas einer Verbrennungskraftmaschine, wobei zunächst eine erste Struktur (3) mit einem ersten Wabenkörper und dann eine zweite Struktur (4) mit einem zweiten Wabenkörper, insbesondere gemäß einer Vorrichtung (1) nach einem der vorhergehenden Ansprüche, vom Abgas durchströmt wird, wobei Partikel nach der zweiten Struktur (4) einen größeren mittleren Durchmesser aufweisen als vor der ersten Struktur (3), **dadurch gekennzeichnet, dass** zwischen der ersten (3) und der zweiten Struktur (4) eine elektrische Potentialdifferenz aufgebaut wird, bei dem die Potentialdifferenz zeitlich mit Frequenzen von höchstens 10 Hz ohne Vorzeichenwechsel variiert.

6. Verfahren nach Anspruch 5, bei dem die Potentialdifferenz größer als 5 Kilovolt (kV) ist.

7. Verfahren nach Anspruch 5 oder 6, bei dem die Potentialdifferenz zwischen der ersten Struktur (3) und der zweiten Struktur (4) positiv ist.

## Claims

1. A device (1) for reducing the number of particles in exhaust gas of an internal combustion engine, comprising at least two structures (3, 4) through which the exhaust gas can flow, **characterized in that**, during operation, the exhaust gas initially flows through a first structure (3) and then through a second structure (4), wherein an electric potential difference can be generated between these structures (3, 4) and further these structures (3, 4) each comprise a honeycomb structure (10) with a plurality of chambers through which a fluid can flow.

2. The device (1) according to claim 1, in which at least one of the structures (3, 4) at least partially has a catalytically active coating.

3. The device (1) according to one of the preceding claims, in which the device (1) has a through-flow direction (2) and the first structure (3) has a first length (7) and the second structure (4) has a second length (8) in the through-flow direction (2), wherein the ratio of the first length (7) to the second length (8) being smaller than one.

4. The device (1) according to one of the preceding claims, in which the first structure (3) has a first length (7) in the through-flow direction (2), with a spacing (9) being formed in the through-flow direction (2) between the first structure (3) and the second structure (4), and with the ratio between first length (7) and spacing (9) being greater than essentially two, preferably greater than essentially four and particularly preferably essentially seven or more.

5. A method for reducing the number of particles in exhaust gas of an internal combustion engine, wherein the exhaust gas initially flows through a first structure (3) with a first honeycomb structure and then through a second structure (4) with a second honeycomb structure, in particular in accordance with a device (1) according to one of the preceding claims, wherein particles behind the second structure (4) have a larger average diameter than in front of the first structure (3), **characterized in that**, between the first (3) and the second structure (4) an electric potential difference is established, in which the potential difference varies over time having frequencies of at most 10 Hz without change of sign.

6. The method according to claim 5, in which the potential difference is greater than 5 kilovolts (kV).

7. The method according to claim 5 or 6, in which the potential difference between the first structure (3) and the second structure (4) is positive.

## Revendications

1. Dispositif (1) de diminution du nombre de particules dans le gaz d'échappement d'une machine à combustion interne comprenant au moins deux structures (3, 4) pouvant être traversées par le gaz d'échappement, **caractérisé en ce que** durant l'opération c'est d'abord une première structure (3) qui est traversée (3) par le gaz d'échappement et puis une deuxième structure (4), dans quel cas entre ces structures (3, 4) une différence de potentiel électrique peut être générée et qu'en plus ces structures (3, 4) comprennent respectivement une structure en nids d'abeilles (10) avec une pluralité de cavités pouvant être traversés par un fluide.

2. Dispositif (1) selon la revendication 1, dans le cas duquel au moins une des structures (3, 4) a au moins partiellement un revêtement à activité catalytique.

3. Dispositif (1) selon l'une des revendications précédentes, dans le cas duquel le dispositif (1) présente une direction d'écoulement (2) et la première structure (3) une première longueur (7) et la deuxième structure (4) une deuxième longueur (8) dans la direction d'écoulement (2), le rapport entre la première longueur (7) et la deuxième longueur (8) étant plus petit que 1.

4. Dispositif (1) selon l'une des revendications précédentes, dans le cas duquel la première structure (3) a une première longueur (7) en direction d'écoulement (2), entre la première structure (3) et la deuxième structure (4) une distance (9) en direction d'écoulement (2) étant réalisée, le rapport entre la première longueur (7) et la distance (9) étant plus grande que sensiblement deux, de préférence plus grande que sensiblement quatre et particulièrement préféré comportant sensiblement sept ou plus.

5. Procédé de diminution du nombre de particules dans le gaz d'échappement d'une machine à combustion interne, dans le cas duquel d'abord une première structure (3) avec un premier corps en nids d'abeilles et puis une deuxième structure (4) avec un deuxième corps en nids d'abeilles, notamment conformément à un dispositif (1) selon l'une des revendications précédentes est traversé par le gaz d'échappement selon l'une des revendications précédentes, des particules selon la deuxième structure (4) ont un diamètre moyen plus grand qu'avant la première structure (3), **caractérisé en ce qu'**entre la première (3) et la deuxième structure (4) une différence de potentiel électrique est constituée, dans le cas duquel la différence de potentiel varie temporellement avec des fréquences d'au maximum 10 Hz sans changement de signe.

6. Procédé selon la revendication 5, dans le cas duquel la différence de potentiel est plus grande que 5 Kilovolt (kV).

7. Procédé selon la revendication 5 ou 6, dans le cas duquel la différence de potentiel entre la première structure (3) et la deuxième structure (4) est positive.
